# EUROPÄISCHE PATENTSCHRIFT

(11) **EP 1 809 904 B1**
(45) Veröffentlichungstag und Bekanntmachung des Hinweises auf die Patenterteilung: **18.02.2015**
(21) Anmeldenummer: 05794768.1
(22) Anmeldetag: 11.10.2005
(51) Int. Cl.: F04B 53/00, F04B 53/10

(54) **KOLBENPUMPE**
PISTON PUMP
POMPE A PISTON

(30) Priorität: 02.11.2004 DE 102004052817
(43) Veröffentlichungstag der Anmeldung: 25.07.2007
(73) Patentinhaber: ROBERT BOSCH GMBH, 70442 Stuttgart (DE)
(72) Erfinder: ALAZE, Norbert, 71706 Markgroeningen (DE)
(86) Internationale Anmeldenummer: PCT/EP2005/055152
(87) Internationale Veröffentlichungsnummer: WO 2006/048366

(56) Entgegenhaltungen:
- DE-A1- 10 015 295
- US-A- 5 123 819
- US-A1- 2003 021 709
- US-B1- 6 171 083
- PATENT ABSTRACTS OF JAPAN Bd. 2003, Nr. 12, 5. Dezember 2003 (2003-12-05) & JP 2004 052731 A (NIPPON CONTROL KOGYO CO LTD), 19. Februar 2004 (2004-02-19)
- PATENT ABSTRACTS OF JAPAN Bd. 2003, Nr. 12, 5. Dezember 2003 (2003-12-05) & JP 2005 240599 A (MIKUNI CORP), 8. September 2005 (2005-09-08)
- BEHRENDT R: "GERAEUSCHARME UND LECKAGESICHERE PUMPEN" O + P OLHYDRAULIK UND PNEUMATIK, VEREINIGTE FACHVERLAGE, MAINZ, DE, Bd. 47, Nr. 1, Januar 2003 (2003-01), Seiten 26-27, XP001184481 ISSN: 0341-2660

## Beschreibung

### Stand der Technik

Die Erfindung geht von einer Kolbenpumpe gemäß der im Oberbegriff des Patentanspruches 1 näher definierten Art aus.

Eine derartige Kolbenpumpe ist beispielsweise in der US 6,171,083 B1 offenbart. Diese bekannte Kolbenpumpe weist eine aus Kunststoff in einem Spritzgießverfahren hergestellte Laufbuchse auf, in welcher ein Kolben der Kolbenpumpe axial beweglich geführt ist. An der Laufbuchse ist der Ventilsitz eines Auslassventils angeordnet. Kunststofflaufbuchsen haben aufgrund ihrer Elastizität technische Vorteile betreffend Herstellbarkeit, Dämpfung auftretender Druckänderungen und Geräuschentwicklung.

Eine Kolbenpumpe mit einem unmittelbar im Pumpengehäuse geführten Pumpenkolben ist aus der US 2003/0021709 A1 bekannt; die JP 2004052731 A1 offenbart eine Ventileinrichtung für eine Pumpe, bei welcher der Ventilsitz eines Einlassventils aus Geräuschgründen aus einem Gummimaterial herstellt ist.

### Vorteile der Erfindung

Die Kolbenpumpe mit den Merkmalen nach des Patentanspruches 1 hat den Vorteil, dass durch Schaltvorgänge des Auslassventils hervorgerufene Drucküberhöhungen auf der Druckseite wirkungsvoll reduziert werden können, wobei das Dämpfungselement, das bei einem geräuschrelevanten Ausschiebevorgang der Kolbenpumpe, d. h. beim Fördern von Fluid zu der Druckseite der Kolbenpumpe nur mit einem Druck beaufschlagt ist, der sich aus der Differenz zwischen dem in dem Pumpenraum herrschenden Druck und dem auf der Druckseite herrschenden Betriebsdruck ergibt, in allen relevanten Druckbereichen und insbesondere auch bei Drücken oberhalb von etwa 50 bar wirkt.

Die Kolbenpumpe kann insbesondere als Pumpe bei einer Bremsanlage eines Kraftfahrzeuges eingesetzt werden und in diesem Falle zum Steuern des Drucks in Radbremszylindern dienen. Die Kolbenpumpe nach der Erfindung findet beispielsweise bei einer Bremsanlage mit einer Radschlupfregelung (ABS bzw. ESP) und/oder bei einer elektrohydraulischen Bremsanlage (EHB) ,Anwendung. Die Pumpe dient dann beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Auch kann die Pumpe zum Füllen eines Speichers der Bremsanlage dienen. Mittels einer Radschlupfregelung kann beispielsweise ein Blockieren der Räder des Kraftfahrzeugs bei einem Bremsvorgang (ABS) und/oder ein Durchdrehen der angetriebenen Räder des Kraftfahrzeugs (ASR) verhindert werden. Bei einer als Lenkhilfe dienenden Bremsanlage (FDR) wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Bei Anwendung der Pumpe in Verbindung mit einer elektrohydraulischen Bremsanlage (EHB) fördert die Pumpe Bremsflüssigkeit in den Radbremszylinder bzw. in die Radbremszylinder, wenn ein elektrischer Bremspedalsensor eine Betätigung des Bremspedals erfasst.

Die Kolbenpumpe umfasst erfindungsgemäß ein Dämpfungselement, das als ringförmige Dämpfungsscheibe ausgebildet ist, die sich an einem federelastischen Bauteil abstützt, welches sich wiederum an einer Laufhülse für den Pumpenkolben abstützt. Eine freie Stirnfläche der Dämpfungsscheibe weist vorzugsweise in axiale Richtung der Kolbenpumpe und in Richtung des Auslassventils. Diese Fläche stellt die Wirkfläche des Dämpfungselementes dar.
Das federelastische Bauteil für das Dämpfungselement ist bei der Kolbenpumpe nach der Erfindung zwischen dem Dämpfungselement und einer Laufhülse für den Pumpenkolben eingespannt.

Um eine gute Führung des Dämpfungselements zu gewährleisten, ist die Dämpfungsscheibe vorzugsweise ein ringbundartiger Bestandteil eines Rohrstücks, das vorzugsweise in einer Laufhülse für den Pumpenkolben geführt ist. Alternativ kann das Rohrstück auch in einem Gehäuseteil oder einem sonstigen ortsfesten Bauteil der Pumpe geführt sein.

Um eine möglichst gute Dämpfungswirkung zu erreichen, ist das Dämpfungselement zweckmäßigerweise in unmittelbarer Nähe des Auslassventils angeordnet. Insbesondere kann das Dämpfungselement einen Ventilsitz für ein Ventilschließglied des Auslassventils bilden.

Grundsätzlich kann das federelastische Bauteil in beliebiger Bauweise ausgeführt sein. Es sollte nur gewährleistet sein, dass das Dämpfungselement mittels des federelastischen Bauteils rechtwinklig zu seiner Wirkfläche vorgespannt ist. Jedoch ist es vorteilhaft, das federelastische Bauteil als Gummielement auszuführen, das auch Dichtungsaufgaben übernehmen kann. Bei einer hiervon abweichende Ausführung des federelastischen Bauteils müssen gegebenenfalls zusätzliche Dichtelemente im Bereich des Dämpfungselements angeordnet werden.

Das Gummielement kann ringförmig ausgebildet sein, am Umfang des die Dämpfungsscheibe aufweisenden Rohrstücks dichtend bzw. formschlüssig anliegen und in radialer Richtung von einem Ringraum bzw. Ringspalt begrenzt sein.

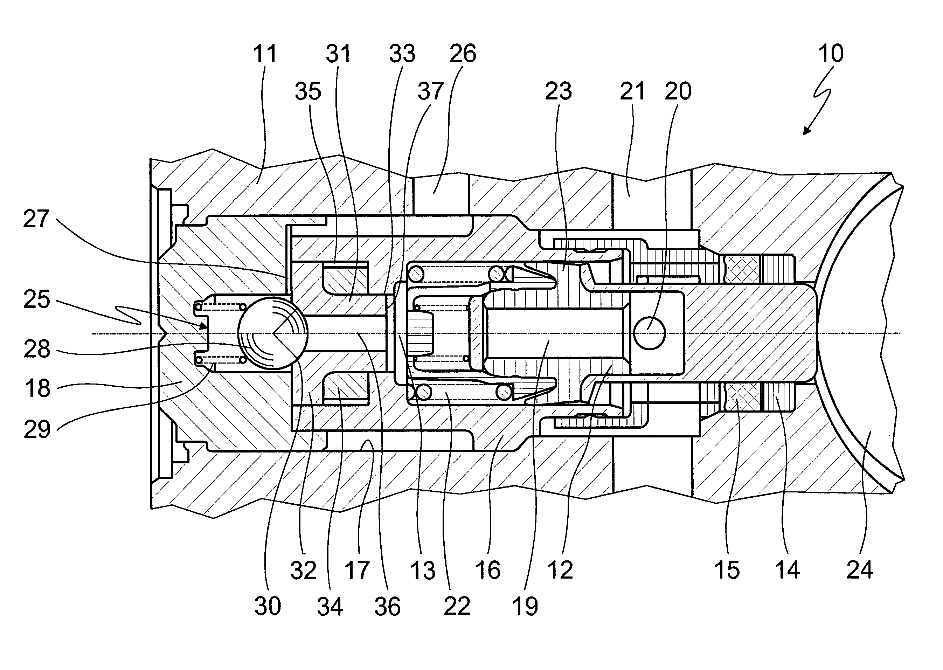

Weitere Vorteile und vorteilhafte Ausgestaltungen des Gegenstandes nach der Erfindung sind der Beschreibung, der Zeichnung und den Patentansprüchen entnehmbar.

### Zeichnung

Eine erfindungsgemäß ausgeführte Kolbenpumpe ist in der Zeichnung schematisch vereinfacht dargestellt und wird in der nachfolgenden Beschreibung näher erläutert.

Die einzige Figur der Zeichnung zeigt einen Längsschnitt durch eine Kolbenpumpe einer elektrohydraulischen Bremsanlage.

### Beschreibung des Ausführungsbeispiels

In der Zeichnung ist eine Kolbenpumpe 10 dargestellt, die in einen Hydraulikblock integriert ist, welcher ein Pumpengehäuse 11 bildet. Der Hydraulikblock ist Bestandteil einer elektrohydraulischen Fahrzeugbremsanlage und umfasst neben der Kolbenpumpe 10 gegebenenfalls weitere Kolbenpumpen gleicher Bauart sowie hydraulische Bauteile wie Magnetventile oder Druckspeicher, die hydraulisch miteinander und mit der in der Zeichnung dargestellten Kolbenpumpe 10 verschaltet sein können.

Die Kolbenpumpe 10 ist mit einem mehrteilig aufgebauten Pumpenkolben 12 versehen, der an einem einem Verdrängungs- bzw. Pumpenraum 13 abgewandten Ende über einen Führungsring 14 in das Pumpengehäuse 11 geführt und mittels eines Dichtrings 15 abgedichtet ist. Ein dem Verdrängungsraum 13 zugewandtes Ende des Pumpenkolbens 12 ist über einen Ringbund 23 in einer Laufhülse 16 geführt, die in eine Bohrung 17 des Gehäuses 11 eingepasst und mittels eines so genannten Auslassventildeckels 18 fixiert ist, der auch als Verschlussteil für die in den Hydraulikblock integrierte Pumpe 10 dient.

Der Pumpenkolben 12 weist einen sacklochartigen Axialkanal 19 auf, der über Querbohrungen 20 mit einem eine Saugseite der Kolbenpumpe 10 bildenden Einlasskanal 21 verbunden ist, so dass beim Ansaugen Fluid aus dem Einlasskanal 21 über die Querbohrung 20 und den Axialkanal 19 in den Verdrängungsraum 13 gefördert werden kann.

Der Pumpenkolben 12 ist des Weiteren mittels einer Rückstellfeder 22 in der dem Verdrängungsraum 13 abgewandten Richtung vorgespannt. Die Rückstellfeder 22 drückt den Pumpenkolben 12 über den zur Führung in der Laufhülse 16 dienenden Ringbund 23 in axialer Richtung gegen einen elektromotorisch rotierend antreibbaren Exzenter 24, der zum Antrieb des Kolbens 12 dient, so dass dieser eine hin- und hergehende Bewegung erfährt.

In dem Auslassventildeckel 18 ist ein als Rückschlagventil ausgebildetes Auslassventil 25 angeordnet, das einen Fluidstrom zwischen dem Verdrängungsraum 13 und einen eine Druckseite bildenden Auslasskanal 26 steuert und hierzu an der der Laufhülse 16 zugewandten Stirnseite mit einem zu dem Auslasskanal 26 führenden Verbindungskanal 27 versehen ist.

Das Auslassventil 25 umfasst ein kugelförmiges Ventilschließglied 28, das mittels einer Spiralfeder 29 in Schließrichtung vorgespannt ist und mit einem als Kegelsitz ausgebildeten Ventilsitz 30 zusammenwirkt.

Der Ventilsitz 30 ist an einem Rohrstück 31 ausgebildet, das einen Ringbund 32 aufweist, der eine Dämpfungsscheibe bildet und in radialer Richtung in der Laufhülse 16 geführt ist. Mit seinem Bereich verringerten Durchmessers ist das Rohrstück 31 an einer Führung 33 der Laufhülse 16 für den Pumpenkolben 12 axial beweglich geführt.

Zwischen dem Ringbund 32 und dem Führungsbereich 33 der Laufhülse 16 ist ein als Gummielement ausgebildetes federelastisches Bauteil 34 eingespannt, das das Rohrstück 31 formschlüssig umgreift und radial von einem Ringraum bzw. -spalt 35 begrenzt ist, so dass das feder- bzw. gummielastische Bauteil 34 bei einer axialen, in Richtung des Exzenters 24 erfolgenden Bewegung des Rohrstücks 31 in axialer Richtung der Kolbenpumpe 10 komprimierbar ist.

Das Rohrstück 31 hat einen Innenraum 36, der sich an den Verdrängungsraum 13, der an den Pumpenkolben 12 grenzt, anschließt und über den das Fluid bei einem Fördervorgang zu dem Verbindungskanal 27 in dem Auslassventildeckel 18 gefördert wird.

Die in der Zeichnung dargestellte Kolbenpumpe 10 arbeitet in nachfolgend beschriebener Weise.

Während einer Saugphase wird der Pumpenkolben 12 mittels der Rückstellfeder 13 in der dem Auslassventil 25 abgewandten Richtung vorgegeben durch eine Drehbewegung des Exzenters 24 axial verschoben, so dass über die Querbohrungen 20 und den Axialkanal 19 des Pumpenkolbens 12 Fluid in den Verdrängungsraum 13 gefördert wird. Während der Saugphase wird der eine Dämpfungsscheibe darstellende Ringbund 32 des Rohrstücks 31 durch den auf das Ventilschließglied 28 wirkenden Druck, welcher einen Betriebsdruck der Kolbenpumpe 10 darstellt, in Richtung des Pumpenkolbens 12 bzw. des Verdrängungsraums 13 gedrückt.

Gegebenenfalls in dem Ringraum 35 enthaltenes Fluid wird über einen zwischen dem Ringbund 32 und der Laufhülse 16 angeordneten Drosselspalt während der Saugphase ausgedrückt:

Bei einer weiteren Drehung des Exzenters 24 wird der Pumpenkolben 12 in Richtung des Auslassventils 25 gedrückt, so dass eine Druckphase eingeleitet wird, bei der Fluid aus dem Verdrängungsraum 13 zu dem Auslasskanal 26 gefördert wird. Zunächst bewegt sich hierbei das Rohrstück 31 durch den auf die dem Auslassventil 25 abgewandte Stirnseite 37 wirkenden Druck in Richtung des Auslassventildeckels 18. Dabei öffnet sich das Auslassventil 25, wobei hierauf auftretende Druckschwingungen, die über dem Betriebsdruck liegen können, durch eine Bewegung des Rohrstücks 31 in Richtung des Pumpenkolbens 12 abgedämpft werden können.

## Patentansprüche

1. Kolbenpumpe, mit einem Pumpengehäuse (11), in dem ein Pumpenkolben (12) axial beweglich geführt ist, so dass bei einer Betätigung des Pumpenkolbens (12) ein Fluid von einer Saugseite (21) über einen an den Pumpenkolben (12) grenzenden Pumpenraum (13) zu einer Druckseite (26) gefördert wird, wobei die Druckseite (26) mit einem Auslassventil (25) versehen ist und wobei dem Auslassventil (25) ein Dämpfungselement (31) vorgeschaltet ist, **dadurch gekennzeichnet,**
**dass** das Dämpfungselement (31) eine Dämpfungsscheibe (32) umfasst, die sich an einem federelastischen Bauteil (34) abstützt, wobei das federelastische Bauteil (34) zwischen dem Dämpfungselement (31) und einer Laufhülse (16) für den Pumpenkolben (12) eingespannt ist.

2. Kolbenpumpe nach Anspruch 1, **dadurch gekennzeichnet, dass** die Dämpfungsscheibe (32) ein ringbundartiger Bestandteil eines Rohrstücks (31) ist, das vorzugsweise in einer Laufhülse (16) für den Pumpenkolben (12) geführt ist.

3. Kolbenpumpe nach Anspruch 1 oder 2, **dadurch gekennzeichnet, dass** das Dämpfungselement (31) einen Ventilsitz (30) für ein Ventilschließglied (28) des Auslassventils (25) bildet.

4. Kolbenpumpe nach einem der Ansprüche 1 bis 3, **dadurch gekennzeichnet, dass** das federelastische Bauteil (34) aus einem Gummielement gebildet ist.

5. Kolbenpumpe nach Anspruch 4, **dadurch gekennzeichnet, dass** das Gummielement (34) ringförmig ausgebildet ist, das Dämpfungselement (31) formschlüssig umgreift und in radialer Richtung von einem Ringraum (35) begrenzt ist.

## Claims

1. Piston pump, having a pump housing (11), in which a pump piston (12) is guided such that it can be moved axially, with the result that, upon actuation of the pump piston (12), a fluid is conveyed from a suction side (21) via a pump space (13) which adjoins the pump piston (12) to a pressure side (26), the pressure side (26) being provided with an outlet valve (25), and a damping element (31) being connected upstream of the outlet valve (25), **characterized in that** the damping element (31) comprises a damping disc (32) which is supported on a resilient component (34), the resilient component (34) being clamped in between the damping element (31) and a running sleeve (16) for the pump piston (12).

2. Piston pump according to Claim 1, **characterized in that** the damping disc (32) is an annular collar-like constituent part of a tubular piece (31) which is preferably guided in a running sleeve (16) for the pump piston (12).

3. Piston pump according to Claim 1 or 2, **characterized in that** the damping element (31) forms a valve seat (30) for a valve closing member (28) of the outlet valve (25).

4. Piston pump according to one of Claims 1 to 3, **characterized in that** the resilient component (34) is formed from a rubber element.

5. Piston pump according to Claim 4, **characterized in that** the rubber element (34) is of annular configuration, engages around the damping element (31) in a positively locking manner and is delimited in the radial direction by an annular space (35).

## Revendications

1. Pompe à piston, comprenant un carter de pompe (11) dans lequel un piston de pompe (12) est guidé de manière déplaçable axialement, de telle sorte que, lors d'un actionnement du piston de pompe (12), un fluide soit refoulé à partir d'un côté d'aspiration (21), via une chambre de pompe (13) adjacente au piston de pompe (12), jusqu'à un côté de pression (26), le côté de pression (26) étant pourvu d'une soupape d'évacuation (25) et un élément d'amortissement (31) étant placé en amont de la soupape d'évacuation (25), **caractérisée en ce que**
l'élément d'amortissement (31) comporte un disque d'amortissement (32) qui s'appuie contre un composant élastique (34), le composant élastique (34) étant serré entre l'élément d'amortissement (31) et une douille de course (16) pour le piston de pompe (12).

2. Pompe à piston selon la revendication 1, **caractérisée en ce que** le disque d'amortissement (32) est un élément constitutif en forme de collerette annulaire d'une pièce tubulaire (31), laquelle est guidée de préférence dans une douille de course (16) pour le piston de pompe (12).

3. Pompe à piston selon la revendication 1 ou 2, **caractérisée en ce que** l'élément d'amortissement (31) forme un siège de soupape (30) pour un organe de fermeture de soupape (28) de la soupape d'évacuation (25).

4. Pompe à piston selon l'une quelconque des revendications 1 à 3, **caractérisée en ce que** le composant élastique (34) est formé à partir d'un élément en caoutchouc.

5. Pompe à piston selon la revendication 4, **caractérisée en ce que** l'élément en caoutchouc (34) est annulaire, s'engage par complémentarité de formes autour de l'élément d'amortissement (31) et est limité dans la direction radiale par un espace annulaire (35).
